# EUROPÄISCHE PATENTSCHRIFT

(11) **EP 2 678 463 B1**
(45) Veröffentlichungstag und Bekanntmachung des Hinweises auf die Patenterteilung: **28.12.2016**
(21) Anmeldenummer: 12708102.4
(22) Anmeldetag: 24.02.2012
(51) Int. Cl.: C25D 13/12, B32B 15/14, C09D 5/44, C25D 5/56, C25D 13/04, C25D 5/02, C25D 9/02, C08J 5/04, B29C 65/00, B29C 41/14, B29C 41/20

(54) **SELEKTIV BESCHICHTETE CFK-BAUTEILE UND VERFAHREN ZU DEREN HERSTELLUNG**
SELECTIVELY COATED CRP COMPONENTS AND PROCESS FOR THE PRODUCTION THEREOF
ÉLÉMENTS RENFORCÉS PAR DES FIBRES DE CARBONE REVÊTUS SÉLECTIVEMENT ET LEUR PROCÉDÉ DE FABRICATION

(30) Priorität: 25.02.2011 DE 102011004801
(43) Veröffentlichungstag der Anmeldung: 01.01.2014
(73) Patentinhaber: Fraunhofer-Gesellschaft zur Förderung der angewandten Forschung e.V., 80686 München (DE); Airbus Operations GmbH, 21129 Hamburg (DE)
(72) Erfinder: PLAGEMANN, Peter, 28329 Bremen (DE); BRINKMANN, Andreas, 27726 Worpswede (DE); ZOCKOLL, Anja, 45277 Essen (DE); FANGMEIER ,Armin, 32369 Rahden (DE); SCHRÖDER , Simone, 28219 Bremen (DE); LEMCKAU ,Thomas, 21614 Buxtehude (DE); KOTT, Rouven, 28259 Bremen (DE)
(74) Vertreter: Eisenführ Speiser
(86) Internationale Anmeldenummer: PCT/EP2012/053196
(87) Internationale Veröffentlichungsnummer: WO 2012/113926

(56) Entgegenhaltungen:
- DE-A1- 2 821 047
- JP-A- 4 074 868
- US-A1- 2010 321 890
- Merlin D. Danford ET AL: "Galvanic coupling between D6AC steel, 6061-T6 aluminum, inconel 718, and graphite-epoxy composite material : corrosion occurrence and prevention", , 1. Januar 1983 (1983-01-01), XP055055091, Gefunden im Internet: URL:http://ntrs.nasa.gov/archive/nasa/casi .ntrs.nasa.gov/19840005195_1984005195.pdf [gefunden am 2013-03-04]
- LU F.,.ZHONG Q: P.: "GALVANIC CORROSION AND PROTECTION OF GECM/LY12CZ COUPLES UNDER DIFFERENT ATMOSPHERIC EXPOSURE CONDITIONS", ACTA METALLURGICA SINICA (ENGLISH LETTERS), Bd. 16, Nr. 1, 2003, Seiten 41-45, XP002693214,
- FESSMANN ET AL: "Adherent metallization of carbon-fibre-reinforced plastic composites using a combined vacuum/electrochemical deposition process", SURFACE AND COATINGS TECHNOLOGY, ELSEVIER, AMSTERDAM, NL, Bd. 54-55, 1. Januar 1992 (1992-01-01), Seiten 599-603, XP022428427, ISSN: 0257-8972, DOI: 10.1016/S0257-8972(07)80090-9

## Beschreibung

Die vorliegende Erfindung betrifft primär ein Bauteil aus carbonfaserverstärktem Kunststoff (im Folgenden auch "CFK-Bauteil" genannt), bestehend aus oder umfassend ein Matrixmaterial (M) und in das Matrixmaterial (M) eingebettete Carbonfasern,
wobei das Bauteil wenigstens einen Oberflächenabschnitt (A) besitzt,
der einen oder mehrere freiliegende Bereiche der Carbonfasern aufweist,
dadurch gekennzeichnet, dass der bzw. die freiliegende(n) Bereich(e) der Carbonfasern selektiv mit einer Schicht (S) beschichtet ist. bzw. sind,
wobei die Schicht (S) eine Schicht aus Tauchlack, die durch elektrophoretisches Tauchlackieren aufgebracht wurde, oder eine durch Elektropolymerisation hergestellte Schicht ist.

Zudem betrifft die vorliegende Erfindung neue Verfahren zur Herstellung von selektiv beschichteten CFK-Bauteilen, insbesondere von erfindungsgemäßen, selektiv beschichteten CFK-Bauteilen.

Gemäß einem weiteren Aspekt betrifft die vorliegende Erfindung eine Baugruppe bestehend aus oder umfassend
(A) ein erfindungsgemäßes Bauteil und
(B) ein Bauteil umfassend oder bestehend aus einem Material ausgewählt aus der Gruppe bestehend aus Stahl, Eisen, Kupfer, Aluminium, Magnesium und Legierungen davon,
wobei das Bauteil gemäß (A) und das Bauteil gemäß (B) (vorzugsweise über eine oder mehrere Kontaktflächen) miteinander verbunden sind.

Weitere Aspekte der vorliegenden Erfindung, insbesondere bevorzugte Ausgestaltungen, ergeben sich aus der nachfolgenden Beschreibung, den Ausführungsbeispielen sowie den beigefügten Patentansprüchen.

Die Verwendung von CFK-Bauteilen, d. h. von Bauteilen aus carbonfaserverstärktem Kunststoff, ist seit Langem bekannt. Solche Bauteile umfassen in der Regel ein Matrixmaterial, üblicherweise Kunststoff, und in das Matrixmaterial inkorporierte, d. h. eingebettete, Carbonfasern. CFK-Bauteile werden u. a. als hochfeste und hochtemperaturbeständige Verbundwerkstoffe in der Luft- und Raumfahrt sowie der Automobilindustrie eingesetzt. Die zur Herstellung von carbonfaserverstärkten Kunststoffen eingesetzten Fasern werden üblicherweise aus Polyacrylmethyl, Zelluloseacetat oder teerartigen Rückständen der Erdölraffination hergestellt. Die erhaltenen Fasern werden dann üblicherweise stabilisiert (in eine unschmelzbare Form überführt), unter Abspaltung flüchtiger Produkte karbonisiert und graphitisiert. Die graphitisierten Fasern werden üblicherweise vor der Verwendung zur Herstellung von carbonfaserverstärkten Kunststoffen einer (oxidativen) Oberflächenbehandlung unterzogen, um eine bessere Adhäsion zwischen Carbonfaser und Matrixmaterial zu erhalten. Die Carbonfasern werden zur Faserverstärkung von Kunststoffen üblicherweise in Form von Garnen, Bändern, Geweben und dergleichen eingesetzt. Weiterhin werden kurze Carbonfasern auch als Füllstoffe eingesetzt.

In der Regel besitzen CFK-Bauteile einen oder mehrere freiliegende Bereiche der Carbonfasern, d. h. einen oder mehrere Oberflächenabschnitte an denen Carbonfaserbereiche nicht von Matrixmaterial bedeckt sind. Solche Bereiche resultieren insbesondere aus bei der Herstellung oder der Verarbeitung von CFK-Bauteilen herbeigeführten Schnittkanten, Bohrungen oder sonstigen Verletzungen des Verbundwerkstoffes. Die Carbonfasern unterscheiden sich jedoch in der Regel hinsichtlich chemischer und insbesondere physikalischer Eigenschaften grundlegend von dem Matrixmaterial, so dass solche freiliegenden Bereiche der Carbonfasern bei der weiteren Verarbeitung bzw. Verwendung der CFK-Bauteile häufig besonders berücksichtigt werden müssen. Die Carbonfasern weisen nämlich aufgrund ihrer auf Kohlenstoff basierenden Zusammensetzung ein sehr hohes, mit Edelmetallen vergleichbares Redox-Potential auf, sind besonders leitfähig und unpolar. Hierdurch resultiert (zumindest in einigen Bereichen) eine häufig unerwünschte Leitfähigkeit des Bauteils. Dies führt bei Kontakt solcher CFK-Bauteile mit weiteren Bauteilen, insbesondere Bauteilen umfassend oder bestehend aus Stahl, Eisen oder vor allem metallischen Leichtbaumaterialien wie z. B. Aluminium und Magnesium oder Legierungen davon, häufig korrosionsbedingte Schäden einzelner Bauteile bzw. der gesamten Baugruppe, wenn die freiliegenden Carbonfaserbereiche leitfähig mit anderen Bauteilen verbunden sind. So kann insbesondere beim Fügen von CFK-Bauteilen mit Bauteilen umfassend oder bestehend aus metallischen Materialien wie Stahl, Aluminum und Magnesium bzw. Legierungen davon, das hohe Redox-Potential von Kohlenstoff dazu führen, dass das Korrosionsverhalten der metallischen Materialien wesentlich verändert und unter ungünstigen Bedingungen gegebenenfalls deutlich verschlechtert wird. In einem sich dabei bildenden Kontaktkorrosions-Stromkreis stellen die freiliegenden Bereiche der Carbonfasern aktive Bereiche dar, durch die eine Korrosion der Leichtbaumaterialien verursacht oder verstärkt werden kann.

CFK-Bauteile mit freiliegenden Bereichen der Carbonfasern weisen zudem den Nachteil auf, dass beispielsweise beim Verbinden eines solchen Bauteils durch Kleben mit einem anderen Bauteil aufgrund der gegenüber dem Matrixmaterial unterschiedlichen Oberflächenenergie dieser freiliegenden Bereiche die Hafteigenschaften des CFK-Bauteils aufgrund dieser freiliegenden Bereiche eingeschränkt bzw. verschlechtert sind, so dass gegebenenfalls keine ausreichende Haftung ermöglicht wird.

Zudem stellen solche freiliegenden Bereiche der Carbonfasern eine Schwachstelle bezüglich des Alterungsverhaltens von CFK-Bauteilen dar. Denn dort können an der Phasengrenze zwischen Carbonfaser und Matrixmaterial Elektrolyte deutlich schneller ins Innere des Bauteils gelangen und so insgesamt zu einer geringeren Festigkeit des Bauteils führen.

Im Stand der Technik sind diverse Verfahren beschrieben, die den Ursachen der Kontaktkorrosion bzw. den damit verbundenen Folgen (wie oben beschrieben) zu begegnen versuchen.

So ist beispielsweise bekannt, Bauteile aus Titan in Kombination mit CFK-Bauteilen einzusetzen, da bei der Verbindung (z.B. durch Fügen) von Titan und CFK keine wie oben beschriebene Korrosion auftritt (vgl. Bennie A. Miller Jr., The galvanic corrosion of graphite epoxy composite materials coupled with alloys, Air Force Insitute of Technology Wright-Patterson Air Force Base, Ohio, 1975, und F. Belucci, Galvanic corrosion between nonmetallic composites and metals: Effect of metal and of temperature, Corrosion Vol. 47, No.10). Ein solches Vorgehen weist jedoch den Nachteil auf, dass hohe Materialkosten anfallen.

Ein weiterer, im Stand der Technik bekannter Ansatz befasst sich damit, zwischen freiliegenden Bereichen der Carbonfasern von CFK-Bauteilen und etwaigen Bauteilen aus metallischen Materialien (wie oben beschrieben) möglichst große Abstände zu erreichen (vgl. Egon Kunze, Korrosion und Korrosionsschutz, Wiley-VCH, 2001). Solche Abstände bringen jedoch technische und gestalterische Einschränkungen mit sich. Zudem kann der erforderliche Abstand je nach Umgebungsbedingungen, insbesondere je nach Feuchtigkeitszutritt und Salzkonzentration, variieren. Sofern hierbei Titan in Form eines Abstandshalters eingesetzt wird, fallen zudem hohe Materialkosten an.

Ferner ist im Stand der Technik bekannt, Schnittkanten von CFK-Bauteilen mit Harzen nachzubehandeln, siehe z.B. Merlin D. Danford et al: "Galvanic coupling between D6AC steel, 6061-T6 aluminum, inconel 718, and graphite-epoxy composite material : corrosion occurrence and prevention", 1. Januar 1983 (1983-01-01), http:// ntrs.nasa.gov/archive/nasa/casi.ntrs.nasa.gov/19840005195_1984005195.pdf. Solche Verfahren sind jedoch relativ aufwendig und bieten keine ausreichende, vollständige Sicherheit, dass sämtliche elektrochemisch aktiven, freiliegenden Bereiche der Carbonfasern abgedeckt sind. Zudem haften die Harze zum Teil nicht oder nicht ausreichend auf der Oberfläche des CFK-Bauteils. Des Weiteren wird durch die Nachbehandlung von Schnittkanten mit Harzen häufig die Passgenauigkeit von CFK-Bauteilen, die zur Kombination mit weiteren Bauteilen vorzugsweise erhalten bleiben soll, nachteilig beeinflusst.

Ein weiterer, im Stand der Technik bekannter Ansatz, eine (Kontakt-)Korrosion zwischen CFK-Bauteil und einem metallischen Bauteil (als Fügepartner) zu vermeiden, besteht darin, den metallischen Fügepartner (umfassend oder bestehend aus z.B. Stahl, Aluminium, Kupfer, Magnesium oder Legierungen davon vollständig oder wenigstens an den Kontaktflächen zu beschichten. Im Falle der Verletzung bzw. Zerstörung einer solchen Beschichtung tritt dann jedoch wiederum eine rasch in die Tiefe gehende Korrosion auf. Zudem wurden bereits diverse Verfahren zur Vorbehandlung der CFK-Bauteil-Oberfläche aus dem Bereich der Kunststofflackierung getestet und adaptiert, um oben genannte (Kontakt-)Korrosion zu vermeiden, aber auch, um der oben genannten Problematik hinsichtlich der verschlechterten Hafteigenschaften von CFK-Bauteilen mit freiliegenden Bereichen der Carbonfasern zu begegnen. In diesem Zusammenhang sind beispielsweise Verfahren wie CO₂-Strahlen, Plasmavorbehandlung und Beflammung zu nennen (vgl. Groteklaes, Brock, Mischke, Lehrbuch der Lacktechnologie, Vincentz Verlag, 2000).

Diese Verfahren bergen jedoch den Nachteil, dass zerstörend auf das CFK-Bauteil eingewirkt wird, wodurch noch mehr Carbonfasern freigelegt werden. Außerdem wird durch keines dieser Verfahren eine vollständige Isolierung der freiliegenden Fasern gewährleistet. Beispielsweise bei einer Plasmavorbehandlung und anschließender Verklebung des CFK- Bauteils mit einem metallischen Kontaktpartner kann es durch unterschiedliche Dicke der Klebstoffschicht zu leitfähigen Kontakten in der Klebfuge kommen.

Die primäre Aufgabe der vorliegenden Erfindung bestand daher darin, CFK-Bauteile bereitzustellen, bei deren Verwendung sich die vorstehend genannten Probleme bzw. Nachteile vermeiden lassen. Insbesondere sollten Bauteile bereit gestellt werden, welche dauerhaft mit Materialien wie Stahl, Eisen, Kupfer oder insbesondere Leichtbaumaterialien wie Aluminium und Magnesium verbunden bzw. kontaktiert werden können, ohne dass Kontaktkorrosion bzw. ohne dass ein nicht akzeptabler Grad an Kontaktkorrosion auftritt.

Des Weiteren bestand eine Aufgabe der vorliegenden Erfindung darin, ein Verfahren zur Herstellung solcher Bauteile anzugeben.

Weitere Aspekte der der vorliegenden Erfindung zugrunde liegenden Aufgabe ergeben sich aus der nachfolgenden Beschreibung sowie insbesondere den beigefügten Patentansprüchen.

Die primäre Aufgabe der vorliegenden Erfindung wird gelöst durch ein Bauteil aus carbonfaserverstärktem Kunststoff (CFK-Bauteil), bestehend aus oder umfassend ein Matrixmaterial (M) und in das Matrixmaterial (M) eingebettete Carbonfasern, wobei das Bauteil wenigstens einen Oberflächenabschnitt (A) besitzt, der einen oder mehrere freiliegende Bereiche der Carbonfasern aufweist,
dadurch gekennzeichnet, dass der bzw. die freiliegende(n) Bereich(e) der Carbonfasern selektiv mit einer Schicht (S) beschichtet ist bzw. sind, wobei die Schicht (S) eine Schicht aus Tauchlack, die durch elektrophoretisches Tauchlackieren aufgebracht wurde, oder eine durch Elektropolymerisation hergestellte Schicht ist.

Die freiliegenden, erfindungsgemäß selektiv zu beschichtenden Bereiche der Carbonfasern des Oberflächenabschnitts (A) resultieren insbesondere aus bei der Herstellung oder der Verarbeitung von CFK-Bauteilen herbeigeführten Schnittkanten, Bohrungen oder sonstigen Verletzungen des Verbundwerkstoffes (wie einleitend beschrieben).

Der wenigstens eine Oberflächenabschnitt (A) stellt im Rahmen des vorliegenden Textes einen Oberflächenabschnitt des CFK-Bauteils dar, in welchem ein oder mehrere Bereiche der (im Übrigen in das Matrixmaterial (M) eingebetteten) Carbonfasern nicht von Matrix-material (M) bedeckt sind. Erfindungsgemäß sind diese freiliegenden Bereiche der Carbonfasern selektiv mit einer Schicht (S) beschichtet, wobei die Schicht (S) nicht aus Matrixmaterial (M) besteht.

Der Begriff "selektiv" ist im Zusammenhang mit der vorliegenden Erfindung so zu verstehen, dass eine zielgerichtete Beschichtung auf dem einen Oberflächenabschnitt (A) eines erfindungsgemäßen Bauteils (sowie gegebenenfalls weiteren Oberflächenabschnitten (A)) erfolgt, wobei im Wesentlichen sämtliche der freiliegenden Bereiche der Carbonfasern mit einer Schicht (S) beschichtet sind, während die übrigen Bereiche des Oberflächenabschnitts (A), d. h. die Bereiche, an denen sich an der Oberfläche des Bauteils Matrixmaterial (M) befindet, im Wesentlichen nicht mit der Schicht (S) beschichtet sind. Dabei kann jedoch auch in geringem Maße insofern eine Beschichtung anderer Bereiche des Oberflächenabschnitts (A), d. h. eine Beschichtung von Matrixmaterial (M) mit einer Schicht (S), erfolgen, als dass bestimmte Verfahren zum selektiven Aufbringen der Schicht (S) auf den freiliegenden Bereichen der Carbonfasern (wie im Folgenden beschrieben) zu einem oder mehreren beschichteten Oberflächenbereichen des Oberflächenabschnitts (A) führen können, der bzw. die (geringfügig) größer ist bzw. sind als der freiliegende, selektiv zu beschichtende Carbonfaser-Bereich selbst. Des Weiteren kann je nach gewähltem Verfahren zur selektiven Beschichtung der freiliegenden Bereiche der Carbonfasern zumindest teilweise auch eine Beschichtung von Matrixmaterial (M) im Oberflächenabschnitt (A) erfolgen, wenn sich unmittelbar unter der dortigen Oberfläche Carbonfasern befinden. Dies gilt insbesondere bei den im Rahmen der vorliegenden Erfindung beschriebenen elektrochemischen Beschichtungs-Methoden. Eine solche Beschichtung des Matrixmaterials (M) kann insbesondere bis zu einer maximalen Entfernung von (unter der Oberfläche liegenden) Carbonfasern zur Oberfläche von etwa 100 µm erfolgen, vor allem bis zu einer maximalen Entfernung von etwa 50 µm.

Im Zusammenhang mit der vorliegenden Erfindung gilt daher, dass der wenigstens eine Oberflächenabschnitt (A) eines erfindungsgemäßen Bauteils vorzugsweise nicht vollständig mit einer Schicht (S) beschichtet ist. Zumindest gilt jedoch, dass ein erfindungsgemäßes Bauteil nicht vollständig mit einer Schicht (S) beschichtet ist.

Ein erfindungsgemäßes Bauteil eignet sich aufgrund der selektiven Beschichtung der freiliegenden Carbonfaser-Bereiche vorteilhafterweise besonders gut zur Verwendung in Kombination mit einem oder mehreren weiteren Bauteilen umfassend oder bestehend aus metallischen Materialien wie Stahl, Eisen, Kupfer, Aluminium und Magnesium bzw. Legierungen davon. Denn vorteilhafterweise kann durch eine selektive Beschichtung der freiliegenden Carbonfaser-Bereiche an Oberflächenabschnitten, an welchen das erfindungsgemäße Bauteil mit einem weiteren Bauteil aus metallischem Material (wie oben beschrieben) verbunden ist, das Entstehen eines Kontaktkorrosions-Stromkreises verhindert oder zumindest verzögert werden. Insbesondere kann verhindert werden, dass sich durch freiliegende Bereiche von Carbonfasern aktive Bereiche bilden, durch die eine Kontaktkorrosion der Materialien verursacht oder verstärkt werden kann. Bei einem Oberflächenabschnitt (A) (wie oben beschrieben) handelt es sich demnach vorzugsweise um einen Oberflächenabschnitt, der mit einem Oberflächenabschnitt eines weiteren Bauteils, insbesondere eines Bauteils umfassend oder bestehend aus Materialien wie vorangehend beschrieben, in Kontakt gebracht ist bzw. dazu vorgesehen ist.

Eine (erfindungsgemäße) selektive Beschichtung bietet (insbesondere gegenüber einer vollständigen Beschichtung) diverse Vorteile, zum Beispiel eine bessere Materialeffizienz und einen geringe(re)n Einfluss auf die Passgenauigkeit und (sonstige) Oberflächeneigenschaften des Bauteils.

Im Rahmen der vorliegenden Erfindung handelt es sich bei der Schicht (S) um eine mittels elektrochemischem bzw. elektrophoretischem Verfahren (wie hierin beschrieben) aufgebrachte Schicht.

### Erfindungsgemäß ist die Schicht (S)

- eine Schicht aus Tauchlack, oder
- eine durch Elektropolymerisation hergestellte Schicht.

### Bevorzugt ist ein Bauteil (wie oben beschrieben), wobei die Schicht (S)

- eine Schicht aus Tauchlack oder
- eine durch Elektropolymerisation hergestellte Schicht
ist.

Eine Schicht aus Tauchlack ist im Rahmen der vorliegenden Erfindung als durch elektrophoretisches Tauchlackieren aufgebrachte Schicht (S) zu verstehen. Details zu kataphoretischem bzw. anaphoretischem Tauchlackieren sind weiter unten beschrieben.

Unter einer durch Elektropolymerisation hergestellten Schicht ist im Rahmen der vorliegenden Erfindung insbesondere eine Schicht zu verstehen, die durch potentiostatische, galvanostatische oder potentiodynamische Elektropolymerisation aufgebracht ist. Details hierzu sind weiter unten beschrieben.

Im Ergebnis ist daher ein erfindungsgemäßes Bauteil (wie oben beschrieben) besonders bevorzugt, welches herstellbar ist durch ein Verfahren umfassend folgende Schritte:
(i) Bereitstellen eines Bauteils aus carbonfaserverstärktem Kunststoff, bestehend aus oder umfassend ein Matrixmaterial (M) und in das Matrixmaterial (M) eingebettete Carbonfasern, wobei das Bauteil wenigstens einen Oberflächenabschnitt (A) besitzt, der einen oder mehrere freiliegende Bereiche der Carbonfasern aufweist, und
(ii) Beschichten der freiliegenden Bereiche der Carbonfasern mit einer Schicht (S) durch
   (a) elektrophoretisches, insbesondere kataphoretisches oder anaphoretisches Tauchlackieren, vorzugsweise durch kataphoretisches Tauchlackieren,
   (b) potentiostatische, galvanostatische oder potentiodynamische Elektropolymerisation, vorzugsweise potentiostatische Elektropolymerisation,
so dass die freiliegenden Bereiche der Carbonfasern des wenigstens einen Oberflächenabschnitts (A) selektiv mit einer Schicht (S) beschichtet werden.

Erfindungsgemäß ist es demnach generell besonders bevorzugt, wenn der bzw. die freiliegenden Bereiche der Carbonfasern eines erfindungsgemäßen Bauteils (wie oben beschrieben) selektiv mit einer mittels elektrochemischem/elektrophoretischem Verfahren aufgebrachten Schicht (S) beschichtet ist bzw. sind.

Ein bevorzugter Aspekt der vorliegenden Erfindung betrifft ein Bauteil (wie oben beschrieben), wobei das Beschichten der freiliegenden Bereiche der Carbonfasern mit einer Schicht (S) durch (a) kataphoretisches oder anaphoretisches Tauchlackieren erfolgt (ist).

Falls dagegen das CFK-Bauteil vor der selektiven Beschichtung mit einem weiteren Bauteil, insbesondere einem Bauteil umfassend oder bestehend aus Stahl, Eisen, Kupfer oder einem Leichtbaumaterial wie Aluminium oder Magnesium bzw. Legierungen davon, verbunden worden ist, ist im Rahmen der vorliegenden Erfindung das anaphoretische Tauchlackieren zu bevorzugen. Andernfalls, d.h. wenn das CFK-Bauteil allein (selektiv) beschichtet werden soll, ist im Rahmen der vorliegenden Erfindung das kataphoretische Tauchlackieren zu bevorzugen.

Das grundsätzliche physikalische Prinzip des elektrophoretischen Tauchlackierens, wie es auch im Rahmen der vorliegenden Erfindung Anwendung findet, basiert darauf, dass polymere Materialien kolloidal oder als Partikel in einer wässrigen Lösung (in Form eines Tauchlacks) vorliegen und eine Oberflächenladung aufweisen. Bei diesem Verfahren wird ausgenutzt, dass beim Anlegen einer Gleichspannung mit entsprechendem Vorzeichen an ein leitfähiges Material, das in diesen Tauchlack eingetaucht wird, die geladenen polymeren Materialien zu dem leitfähigen Material wandern. Gleichzeitig laufen an der Oberfläche dieses leitfähigen Materials Reaktionen ab, die zu einer lokalen pH-Wertveränderung führen (beim kataphoretischen Tauchlackieren zu höheren pH-Werten, beim anaphoretischen Tauchlackieren zu niedrigeren pH-Werten). Über die pH-Wertveränderung wird die Abscheidung der polymeren Materialien auf der Oberfläche ausgelöst (Koagulation).

So wird beim Tauchlackieren üblicherweise ein Elektrotauchsystem verwendet, wobei an ein Werkstück (hier: ein Bauteil mit einem Oberflächenabschnitt (A) mit einem oder mehreren selektiv zu beschichtenden, freiliegenden Bereichen der Carbonfasern) eine Gleichspannung angelegt wird. Das Werkstück ist üblicherweise in ein Bad getaucht, welches ein oder mehrere auf das Werkstück elektrophoretisch aufbringbare polymere Materialien enthält. Diese Materialien werden beim Tauchlackieren durch die starke lokale pH-Wert-Erhöhung (kataphoretisch) bzw. -Erniedrigung (anaphoretisch) im Bereich der freiliegenden Carbonfasern selektiv abgeschieden. Die Abscheidungsparameter werden dabei so gewählt, dass vorzugsweise sämtliche der freiliegenden Bereiche der Carbonfasern des Oberflächenabschnitts (A) bzw., sofern gewünscht, sämtliche der freiliegenden Bereiche der Carbonfasern des gesamten Bauteils mit einer Schicht (S) beschichtet werden, welche aus der elektrophoretischen Abscheidung der vorangehend genannten Materialien resultiert.

Vorzugsweise wird im Rahmen der vorliegenden Erfindung das Verfahren des Tauchlackierens so lange durchgeführt, bis sich eine Schicht (S) gebildet hat, die selektiv die freiliegenden Bereiche der Carbonfasern derart (isolierend) beschichtet hat, dass keine elektrische Leitfähigkeit mehr erreicht wird bzw. vorhanden ist.

Gemäß einer weiteren, bevorzugten Ausgestaltung der vorliegenden Erfindung ist die Schicht (S) eine durch Elektropolymerisation aufgebrachte bzw. hergestellte Schicht.

Dabei umfasst oder besteht die Schicht (S) vorzugsweise aus einem Polymer, das aus einer monomeren Einheit, ausgewählt aus der Gruppe bestehend aus Pyrrol, Thiophen, Anilin, Furan, Phenol, Azulen, Carbazol und Derivate davon, aufgebaut ist oder eine solche umfasst.

Die Elektropolymerisation ist ein Prozess bei dem durch Anlegen eines Potentials und/oder durch Elektrolyse eine Polymerisationsreaktion eines oder mehrerer (organischer) Monomere zu einem Polymer erzwungen wird. Die Elektropolymerisation ist dabei von geläufigen Filmbildungsreaktionen wie Polyaddition, Polykondensation oder der radikalisch fortlaufenden Polymerisation zu unterscheiden.

Im Rahmen der vorliegenden Erfindung erfolgt die Elektropolymerisation vorzugsweise auf potentiostatischem, galvanostatischem oder potentiodynamischem Wege.

Besonders bevorzugt ist die potentiostatische Elektropolymerisation. Dabei werden monomere Ausgangsmoleküle (z. B. Pyrrol, Thiophen, Anilin, Furan, Phenol, Azulen oder Carbazol, vorzugsweise Pyrrol oder Thiophen, besonders bevorzugt Pyrrol) an einer Arbeitselektrode in einer elektrochemischen Zelle oxidiert. Bei dieser Methode werden vorzugsweise die selektiv zu beschichtenden freiliegenden Bereiche der Carbonfasern als Arbeitselektrode bevorzugt in einem drei-Elektrodenaufbau integriert. Die beiden weiteren Elektroden sind gemäß bevorzugter Ausgestaltung eine Gegenelektrode, beispielsweise aus Platin (z.B. in Form eines Netzes), und eine Bezugselektrode (z. B. eine Kalomel- oder eine Silber/Silberchlorid-Elektrode). Mittels eines Potentiostaten können die gewünschten Potentialdifferenzen eingestellt werden. Die anzulegende Spannung liegt vorzugsweise oberhalb des kritischen Oxidationspotentials des eingesetzten bzw. eines oder mehrerer der eingesetzten Monomere. Im Ergebnis wird im Rahmen der (potentiostatischen) Elektropolymerisation durch die elektrochemische Oxidation des bzw. der monomeren Einheiten eine elektrochemische Polymerisation auf den freiliegenden Bereichen der Carbonfasern, d. h. der Arbeitselektrode, bewirkt. Der Mechanismus der Elektropolymerisation ist noch nicht bis in alle Details geklärt. Es wird jedoch angenommen, dass hierbei zunächst aus (ungeladenen) Monomeren (je nach Verfahrensgestaltung geladene) Radikale gebildet werden, die dann durch Dimerisierung und anschließende Deprotonierung wiederum neutrale konjugierte Dimere (Moleküle aus zwei Basiseinheiten) bilden. Dieser Zyklus der Radikalbildung, des Kettenwachstums und der anschließenden Deprotonierung wiederholt sich zyklisch mit den vorliegenden Monomeren und deren Polymerisationsprodukten solange das Oxidationspotential an der Arbeitselektrode anliegt. Dabei können an der Arbeitselektrodenoberfläche nicht nur monomere Radikale gebildet werden, sondern auch deren Dimere, Trimere, Tetramere und weitere auf der Basis der eingesetzten Monomere gebildete höhere Homologen bzw. Polymerisationsprodukte. Die so gebildeten Radikale reagieren (beliebig) untereinander und führen zu einem hohen Kettenwachstum an der Arbeitselektrodenoberfläche. Auf diese Weise wird ein hoch molekulares Netzwerk hergestellt, das sich ab einer kritischen Größe auf der Arbeitselektrode abscheidet. Die kritische Größe, welche sich durch die Anzahl der einzelnen Monomereinheiten im Gesamtmolekül definiert, hängt dabei von Temperatur, pH-Wert und Zusammensetzung der Abscheidungslösung ab. Im Ergebnis erfolgt ein Aufwachsen eines Polymers (z. B. Polypyrrol) auf den freiliegenden Bereichen der Carbonfasern, so dass die freiliegenden Bereiche der Carbonfasern (elektrochemisch) selektiv beschichtet werden.

Im Rahmen der vorliegenden Erfindung ist es bei Durchführung der (potentiostatischen) Elektropolymerisation vorteilhafterweise möglich, sowohl aus nichtwässrigen, als auch aus wässrigen Bädern Polymere, z.B. Polypyrrol, auf den freiliegenden Bereich der Carbonfasern abzuscheiden. Weitere Bestandteile können je nach Bad
- Colöser, wie Alkohole, Ester, Ketone oder Ether,
- anorganische oder organische Leitsalze sowie gegebenenfalls
- weitere (Zusatz-)Bestandteile, z. B. Additive oder Katalysatoren (z. B. NaBr), sein.

Sofern Pyrrol oder Thiophen als Monomere im Rahmen der (vorzugsweise potentiostatischen) Elektropolymerisation eingesetzt werden, wird vorzugsweise eine Potentialdifferenz im Bereich von 600 mV bis 1300 mV (gegenüber einer Kalomel-Bezugselektrode) gewählt. Besonders bevorzugt ist bei Verwendung von Pyrrol als Monomer eine Potentialdifferenz im Bereich von etwa 650 mV (gegenüber einer Kalomel-Bezugselektrode). Bei der Verwendung von Thiophen als Monomer ist besonders bevorzugt eine Potentialdifferenz im Bereich von etwa 1200 mV (gegenüber einer Kalomel-Bezugselektrode) zu verwenden.

Besonders bevorzugt ist ein pulsartiges Anlegen des (Oxidations-)Potentials, wobei vorzugsweise eine Pause von jeweils etwa 20 Sekunden zwischen den Abscheidungen gewählt wird. Hierdurch werden vorteilhafterweise besonders homogene Schichten (S) erhalten.

Die Dicke der Schicht (S) lässt sich bei der Elektropolymerisation grundsätzlich durch die Dauer des angelegten Potentials steuern.

Zusammenfassend ist es besonders bevorzugt, wenn das Beschichten der freiliegenden Bereiche der Carbonfasern mit einer Schicht (S) durch potentiostatische Elektropolymerisation erfolgt, wobei ein oder mehrere Monomere ausgewählt aus der Gruppe bestehend aus Pyrrol, Thiophen, Anilin, Furan, Phenol, Azulen, Carbazol und Derivate davon, sowie gegebenenfalls weitere Monomere verwendet werden. Besonders bevorzugt wird bzw. werden Pyrrol und/oder Thiophen als Monomere verwendet.

Weiter bevorzugt ist ein erfindungsgemäßes Bauteil (wie oben beschrieben), wobei die Schicht (S) eine mittlere Dicke im Bereich von 0,1 bis 200 µm, vorzugsweise von 1 bis 60 µm, besitzt.

Sofern die Schicht (S) eine Schicht aus Tauchlack ist (wie oben beschrieben), besitzt diese eine mittlere Dicke im Bereich von 1 bis 200 µm, vorzugsweise von 10 bis 60 µm.

Sofern die Schicht (S) eine durch Polymerisation hergestellte Schicht ist (wie oben beschrieben), besitzt diese vorzugsweise eine mittlere Dicke im Bereich von 0,1 bis 100 µm, vorzugsweise von 1 bis 50 µm.

Besonders bevorzugt ist ein erfindungsgemäßes Bauteil (wie oben beschrieben), wobei das Matrixmaterial (M) ausgewählt ist aus der Gruppe bestehend aus Duroplaste, insbesondere Epoxide, Polyurethane, Polyimide, Phenol-Formaldehydkondensationsharze, ungesättigte Polyester, Vinylesterharze, und Thermoplaste, insbesondere Polyaryletherketone, Polyarylethersulfone, Polypropylen, Polyamide und Polyester.

Bei dem (erfindungsgemäßen) Bauteil kann es sich um ein Bauteil beliebiger Form (z.B. Platten oder Hohlprofile) handeln. Halbzeug ist jedoch erfindungsgemäß weniger bevorzugt.

Ein weiterer Aspekt der vorliegenden Erfindung betrifft ein Verfahren zur Herstellung eines Bauteils aus carbonfaserverstärktem Kunststoff (CFK-Bauteil), vorzugsweise eines erfindungsgemäßen Bauteils wie oben beschrieben, besonders bevorzugt eines erfindungsgemäßen Bauteils, wie vorangehend als bevorzugt bezeichnet, wobei das Verfahren folgende Schritte umfasst:
(i) Bereitstellen eines Bauteils aus carbonfaserverstärktem Kunststoff, bestehend aus oder umfassend ein Matrixmaterial (M) und in das Matrixmaterial (M) eingebettete Carbonfasern, wobei das Bauteil wenigstens einen Oberflächenabschnitt (A) besitzt, der einen oder mehrere freiliegende Bereiche der Carbonfasern aufweist, und
(ii) Beschichten der freiliegenden Bereiche der Carbonfasern mit einer Schicht (S) durch
   (a) elektrophoretisches Tauchlackieren (siehe hierzu oben), vorzugsweise durch kataphoretisches Tauchlackieren, oder
   (b) Elektropolymerisation, vorzugsweise potentiostatische, galvanostatische oder potentiodynamische Elektropolymerisation, besonders bevorzugt potentiostatische Elektropolymerisation,
so dass die freiliegenden Bereiche der Carbonfasern des wenigstens einen Oberflächenabschnitts (A) selektiv mit einer Schicht (S) beschichtet werden.

Für die bevorzugten Ausgestaltungen der Schritte (i) und (ii) gilt das vorangehend Gesagte entsprechend.

Dementsprechend ist es gemäß einer Ausgestaltung des erfindungsgemäßen Verfahrens bevorzugt, wenn das Beschichten der freiliegenden Bereiche der Carbonfasern mit einer Schicht (S) durch (a) kataphoretisches Tauchlackieren (wie oben beschrieben) erfolgt. Dabei gilt das vorangehend im Zusammenhang mit dem Tauchlackieren Gesagte entsprechend.

Gemäß einer weiteren Ausgestaltung des erfindungsgemäßen Verfahrens ist es besonders bevorzugt, wenn das Beschichten der freiliegenden Bereiche der Carbonfasern mit einer Schicht (S) durch (c) potentiostatische Elektropolymerisation erfolgt, vorzugsweise durch potentiostatische Elektropolymerisation unter Verwendung eines Monomers ausgewählt aus der Gruppe bestehend aus Pyrrol, Thiophen, Anilin, Furan, Phenol, Azulen, Carbazol und Derivate davon, so dass eine Schicht (S) erhalten wird, die ein Polymer umfasst oder daraus besteht, das aus einer monomeren Einheit, ausgewählt aus der Gruppe bestehend aus Pyrrol, Thiophen, Anilin, Furan, Phenol, Azulen, Carbazol und Derivate davon, aufgebaut ist oder eine solche umfasst.

Das Matrixmaterial (M) ist vorzugsweise ausgewählt aus der Gruppe bestehend aus Duroplaste, insbesondere Epoxide, Polyurethane, Polyimide, Phenol-Formaldehydkondensationsharze, ungesättigte Polyester, Vinylesterharze, und Thermoplaste, insbesondere Polyaryletherketone, Polyarylethersulfone, Polypropylen, Polyamide und Polyester.

Wie oben beschrieben, eignet sich ein erfindungsgemäßes Bauteil insbesondere zur Kombination mit einem oder mehreren weiteren Bauteilen umfassend oder bestehend aus einem Material wie zum Beispiel Stahl, Eisen, Kupfer, Aluminium oder Magnesium bzw. Legierungen davon.

Dementsprechend betrifft ein weiterer Aspekt der vorliegenden Erfindung eine Baugruppe bestehend aus oder umfassend
(A) ein erfindungsgemäßes Bauteil, vorzugsweise ein erfindungsgemäßes Bauteil wie vorangehend als bevorzugt bezeichnet, und
(B) ein Bauteil umfassend oder bestehend aus einem Material ausgewählt aus der Gruppe bestehend aus Stahl, Eisen, Kupfer, Aluminium und Magnesium und Legierungen davon, vorzugsweise umfassend oder bestehend aus einem Leichtbaumaterial ausgewählt aus der Gruppe bestehend aus Aluminium und Magnesium und Legierungen davon, wobei das Bauteil gemäß (A) und das Bauteil gemäß (B), vorzugsweise über eine oder mehrere Kontaktflächen, (direkt) miteinander verbunden sind (z.B. durch Fügen, insbesondere durch Kleben und/oder Nieten).

Dabei weisen die Kontaktflächen vorzugsweise einen oder mehrere Oberflächenabschnitte (A) auf, an denen die freiliegenden Bereiche der Carbonfasern selektiv mit einer Schicht (S) beschichtet sind (wie vorangehend beschrieben).

Vorteilhafterweise kann durch die selektive Beschichtung der freiliegenden Carbonfaser-Bereiche, insbesondere der freiliegenden Carbonfaser-Bereiche auf den Kontaktflächen an denen das erfindungsgemäße Bauteil (A) mit dem weiteren Bauteil (B) (wie oben beschrieben) zu verbinden ist, das Entstehen eines Kontaktkorrosions-Stromkreises verhindert oder zumindest verzögert werden. Insbesondere kann verhindert werden, dass sich durch freiliegende Bereiche von Carbonfasern aktive Bereiche bilden, durch die eine Kontaktkorrosion der oben genannten Materialien des weiteren Bauteils (B) verursacht oder verstärkt werden kann.

Die Bauteile (A) und (B) sowie gegebenenfalls weiteren Bauteile einer erfindungsgemäßen Baugruppe sind gemäß einer bevorzugten Ausgestaltung der vorliegenden Erfindung furch Fügen mittels dem Fachmann bekannten Verfahren miteinander verbunden.

Die selektive Beschichtung der freiliegenden Bereiche der Carbonfasern des Bauteils (A) kann erfindungsgemäß vor und/oder nach dem Verbinden der Bauteile (A) und (B) erfolgen.

Im Folgenden wird die vorliegende Erfindung anhand von Beispielen näher erläutert.

### Beispiele:

### Verpleichsbeispiel 1 (nicht erfindungsgemäß beschichtetes CFK-Bauteil):

Ein nicht erfindungsgemäß beschichtetes CFK-Bauteil wird leitfähig mit einem Bauteil aus Leichtbaumaterial, nämlich einem Bauteil aus einer Aluminiumlegierung (Al 99,5), kontaktiert und für 200 Stunden im Salzsprühnebeltest gelagert.

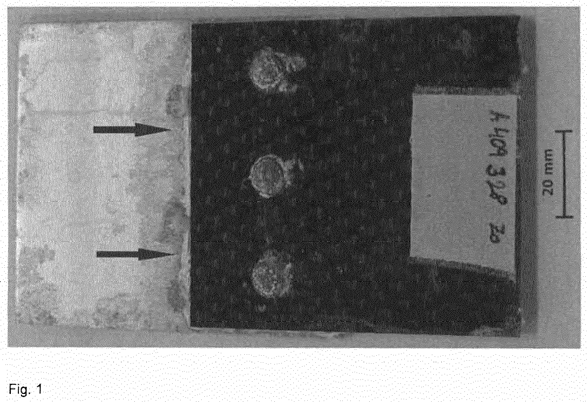

Das Ergebnis des Salzsprühnebeltests ist in Fig. 1 gezeigt.

Nach 200 Stunden im Salzsprühnebeltest kann eine verstärkte bzw. beschleunigte Korrosion des Leichtbaumaterials durch Kontakt mit CFK beobachtet werden (siehe Pfeile in Fig. 1).

### Anwendungsbeispiel 2: Selektive Beschichtung freiliegender Bereiche von Carbonfasern eines CFK-Bauteils mit kataphoretischem Tauchlack:

Ein CFK-Bauteil mit freiliegenden Bereichen von Carbonfasern wird mit einem kataphoretischen Tauchlack (KTL; hier: BASF Cathoguard 310 Elektrotauchlack) beschichtet.

**BASF Cathoguard 310 Elektrotauchlack:**

| Bestandteil: | Beschreibung: | Masse [g] |
|---|---|---|
| VE-Wasser | | 433 |
| SC 18-0110 | Essigsäure, 10%ig | 4 |
| FT 23-0303 | Bindemittel | 451 |
| FT 24-7328 | Pigmentpaste | 112 |

Folgende Abscheidebedingungen werden gewählt: 250 V, 30 °C, 150 s.

Folgende Einbrennbedingungen werden gewählt: 15 Min., 175 °C.

Das Resultat ist ein (erfindungsgemäßes) CFK-Bauteil, wobei die freiliegenden Bereiche der Carbonfasern selektiv mit einer Schicht (S) beschichtet sind. Ein solches Bauteil weist eine besonders gute Benetzbarkeit auf und eignet sich aufgrund der selektiven Beschichtung besonders gut zur Kombination (z.B. durch Fügen) mit einem oder mehreren weiteren Bauteilen bestehend aus oder umfassend Leichtbaumaterialien wie Aluminium, Magnesium oder Legierungen davon.

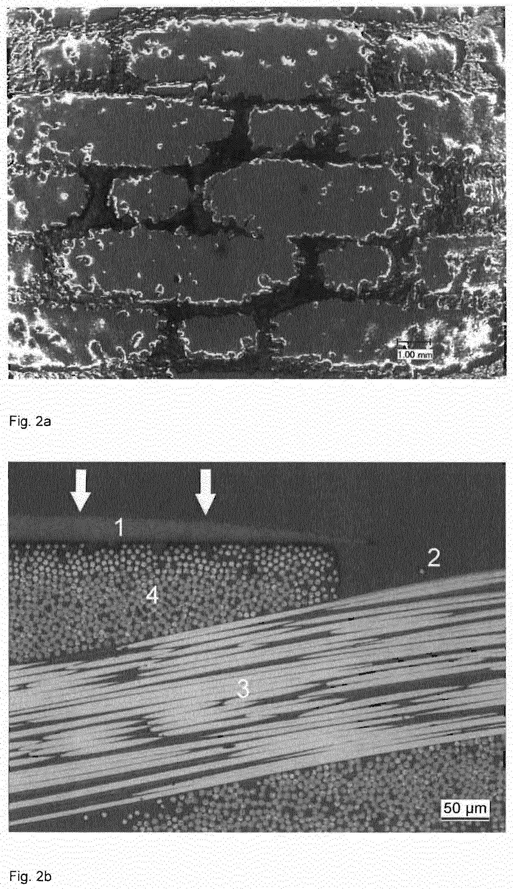

In Fig. 2a ist ein (erfindungsgemäßes) CFK-Bauteil (Duroplast, Prepreg-Gewebe) mit KTL-Schicht zu sehen (Draufsicht Oberfläche).

Fig. 2b zeigt einen Ausschnitt eines Querschnitts eines (erfindungsgemäßen) CFK-Bauteils (Duroplast, Prepreg-Gewebe) mit KTL-Schicht. Aus Fig. 2b (1=KTL-Lack, 2=Bereiche ohne Carbonfasern, 3=Carbonfasern, 4=Carbonfasern) ist ersichtlich, dass sich der KTL-Lack, wie auch im Rahmen der vorstehenden Beschreibung erläutert, teilweise auch in Bereichen abscheidet, bei denen sich die Carbonfasern in oberflächennahen Bereichen befinden. D.h., es findet zumindest teilweise auch eine Beschichtung des Matrixmaterials statt (siehe Pfeile in Fig. 2b). Das CFK-Bauteil ist jedoch nicht vollständig mit KTL beschichtet, sondern vielmehr findet eine elektrochemische, selektive Beschichtung von freiliegenden Bereichen der Carbonfasern sowie teilweise von Matrixmaterial in Bereichen, bei denen unmittelbar unter Oberfläche Carbonfasern liegen, statt (nicht in Fig. 2b gezeigt).

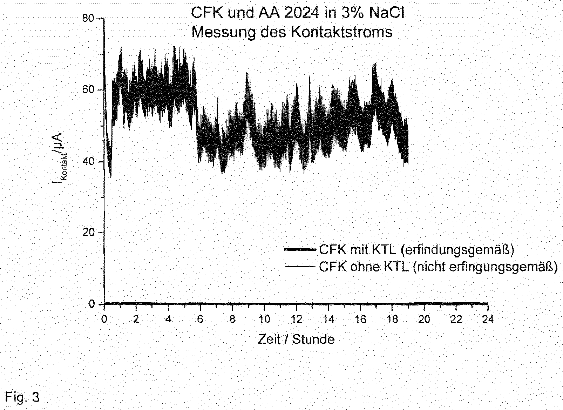

In Fig. 3 ist ein Diagramm gezeigt, welches den Kontaktkorrosionsstrom zwischen (a) einem (nicht erfindungsgemäßen) nicht mit KTL beschichteten CFK-Bauteil und einem Bauteil aus Leichtbaumaterial (hier: AA 2024 clad) bzw. (b) einem (erfindungsgemäßen) selektiv mit KTL beschichteten CFK-Bauteil und einem Bauteil aus Leichtbaumaterial (AA 2024 clad) in 3 %iger NaCl-Lösung zeigt. Die Kurve "CFK mit KTL (erfindungsgemäß)" (betreffend vorstehende Alternative (b)) liegt dabei (im Wesentlichen) auf der X-Achse des Diagramms, d.h. es ist kein Kontaktkorrosionsstrom feststellbar.

### Beispiel 3 (nicht erfindungsgemäß): Abscheidung von Kupfer auf freiliegenden Bereichen der Carbonfasern eines CFK-Bauteils:

Ein CFK-Bauteil mit freiliegenden Bereichen der Carbonfasern wird wie folgt elektrochemisch mittels galvanischer Abscheidung beschichtet:

Als Elektrolyte werden 0,1 mol/l Kupfersulfat und 0,5 mol/l Schwefelsäure eingesetzt.

Folgende Abscheidebedingungen werden gewählt: -300 mVSCE, 10 Minuten

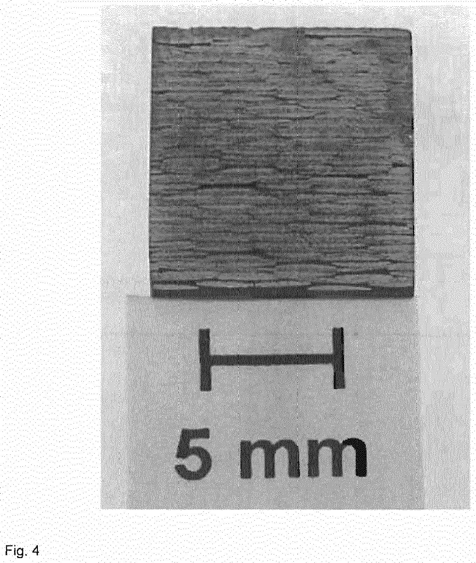

Fig. 4a zeigt das Resultat der selektiven Beschichtung, nämlich die Schnittkanten eines (erfindugnsgemäßen) CFK-Bauteils (Duroplast, 0°/90° Atlas-Gewebe), wobei die freiliegenden Bereiche der Carbonfasern selektiv mit einer Schicht (S) beschichtet sind, welche aus einer elektrochemischen Abscheidung von Kupfer resultiert.

### Anwendungsbeispiel 4: Selektive Beschichtung von freiliegenden Bereichen der Carbonfasern eines CFK-Bauteils mittels Elektropolymerisation:

Ein CFK-Bauteil mit freiliegenden Bereichen der Carbonfasern wird wie folgt elektrochemisch mittels Elektropolymerisation beschichtet:

Als Monomer zum Aufbau der Polymerschicht auf den freiliegenden Bereichen der Carbonfasern wird Pyrrol verwendet.

Folgende Abscheidebedingungen werden gewählt: 750 mV_{SCE}, 45 Minuten.

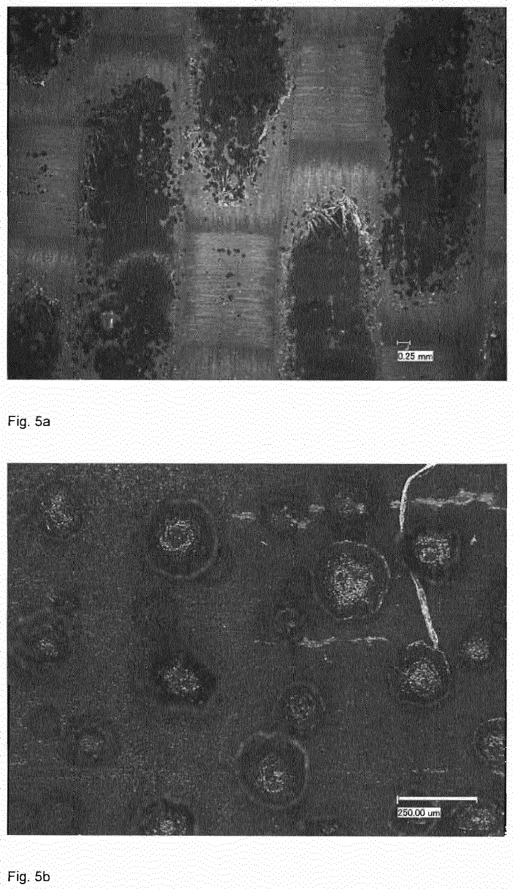

Die Figuren 5a und 5b zeigen Draufsichten von Oberflächen-Ausschnitten (5a Oberfläche, 5b Schnittkante) von (erfindungsgemäßen) CFK-Bauteilen, wobei freiliegende Bereiche der Carbonfasern selektiv mit einer Schicht (S) beschichtet sind, wobei die Schicht (S) aus Polypyrrol besteht. Der in Figur 5b gezeigte Oberflächenabschnitt resultiert aus einer Schnittkante.

## Patentansprüche

1. Bauteil aus carbonfaserverstärktem Kunststoff, bestehend aus oder umfassend ein Matrixmaterial (M) und in das Matrixmaterial (M) eingebettete Carbonfasern,
wobei das Bauteil wenigstens einen Oberflächenabschnitt (A) besitzt, der einen oder mehrere freiliegende Bereiche der Carbonfasern aufweist, **dadurch gekennzeichnet, dass** der bzw. die freiliegende(n) Bereich(e) der Carbonfasern selektiv mit einer Schicht (S) beschichtet ist bzw. sind,
wobei die Schicht (S)
- eine durch elektrophoretisches Tauchlackieren aufgebrachte Schicht aus Tauchlack oder
- eine durch Elektropolymerisation hergestellte Schicht ist.

2. Bauteil nach Anspruch 1,
wobei das Beschichten der freiliegenden Bereiche der Carbonfasern mit einer Schicht (S) durch elektrophoretisches Tauchlackieren erfolgt.

3. Bauteil nach Anspruch 1,
wobei die Schicht (S) eine durch Elektropolymerisation hergestellte Schicht ist und ein Polymer umfasst oder daraus besteht, das aus einer monomeren Einheit ausgewählt aus der Gruppe bestehend aus Pyrrol, Thiophen, Anilin, Furan, Phenol, Azulen, Carbazol und Derivate davon, aufgebaut ist oder eine solche umfasst.

4. Bauteil nach einem der vorangehenden Ansprüche, wobei die Schicht (S) eine mittlere Dicke im Bereich von 0,1 bis 200 µm besitzt.

5. Bauteil nach Anspruch 4, wobei die Schicht (S)
- eine Schicht aus Tauchlack ist und eine mittlere Dicke im Bereich von 1 bis 200 µm, vorzugsweise im Bereich von 10 bis 60 µm, besitzt, oder
- eine durch Elektropolymerisation hergestellte Schicht ist und eine mittlere Dicke Im Bereich von 0,1 bis 100 µm, vorzugsweise im Bereich von 1 bis 50 µm, besitzt.

6. Bauteil nach einem der vorangehenden Ansprüche, wobei das Matrixmaterial (M) ausgewählt ist aus der Gruppe bestehend aus Duroplaste, insbesondere Epoxide. Polyurethane, Polyimide, Phenol-Formaldehydkondensationsharze, ungesättigte Polyester, Vinylesterharze, und Thermoplaste, insbesondere Polyaryletherketone, Polyarylethersulfone, Polypropylen, Polyamide und Polyester.

7. Verfahren zur Herstellung eines Bauteils aus carbonfaserverstärktem Kunststoff umfassend die Schritte:
(i) Bereitstellen eines Bauteils aus carbonfaserverstärktem Kunststoff, bestehend aus oder umfassend ein Matrixmaterial (M) und in das Matrixmaterial (M) eingebettete Carbonfasern, wobei das Bauteil wenigstens einen Oberflächenabschnitt (A) besitzt, der einen oder mehrere freiliegende Bereiche der Carbonfasern aufweist, und
(ii) Beschichten der freiliegenden Bereiche der Carbonfasern mit einer Schicht (S) durch
(a) elektrophoretisches Tauchlackieren oder
(b) potentiostatische, galvanostatische oder potentiodynamische Elektropolymerisation,
so dass die freiliegenden Bereiche der Carbonfasern des wenigstens einen Oberflächenabschnitts (A) selektiv mit einer Schicht (S) beschichtet werden.

8. Verfahren nach Anspruch 7,
wobei das Beschichten der freiliegenden Bereiche der Carbonfasern mit einer Schicht (S) durch (a) kataphoretisches Tauchlackieren erfolgt.

9. Verfahren nach Anspruch 8,
wobei das Beschichten der freiliegenden Bereiche der Carbonfasern mit einer Schicht (S) durch (c) potentiostatische Elektropolymerisation unter Verwendung eines oder mehrerer Monomere ausgewählt aus der Gruppe bestehend aus Pyrrol, Thiophen, Anilin, Furan, Phenol, Azulen, Carbazol und Derivate davon, erfolgt,
so dass eine Schicht (S) erhalten wird, die ein Polymer umfasst oder daraus besteht, das aus einer monomeren Einheit ausgewählt aus der Gruppe bestehend aus Pyrrol, Thiophen, Anilin, Furan, Phenol, Azulen, Carbazol und Derivate davon, aufgebaut ist oder eine solche umfasst.

10. Verfahren nach einem der Ansprüche 7 bis 9,
wobei das Matrixmaterial (M) ausgewählt ist aus der Gruppe bestehend aus Duroplaste, insbesondere Epoxide, Polyurethane, Polyimide, Phenol-Formaldehydkondensationsharze, ungesättigte Polyester, Vinylesterharze, und Thermoplaste, insbesondere Polyarylotherketone, Polyarylethersulfone, Polypropylen, Polyamide und Polyester,

11. Baugruppe bestehend aus oder umfassend
(A) ein Bauteil nach einem der Ansprüche 1 bis 6 und
(B) ein Bauteil umfassend oder bestehend aus einem Material ausgewählt aus der Gruppe bestehend aus Stahl, Eisen, Kupfer, Aluminium, Magnesium und Legierungen davon,
wobei das Bauteil gemäß (A) und das Bauteil gemäß (B), vorzugsweise über eine oder mehrere Kontaktflächen, miteinander verbunden sind.

## Claims

1. Component made of carbon fibre strengthened plastic, consisting of or comprising a matrix material (M) and carbon fibres embedded into the matrix material (M),
wherein the component has at least one surface section (A) that exhibits one or several exposed areas of the carbon fibres,
**characterized in that** the exposed area(s) of the carbon fibres is or are, respectively, selectively coated with a layer (S),
wherein the layer (S) is
- a layer of dip coat applied by means of electrophoretic dip coating or
- a layer produced by electropolymerization.

2. Component according to claim 1,
wherein the coating of the exposed areas of the carbon fibres with a layer (S) is carried out by means of electophoretic dip coating.

3. Component according to claim 1,
wherein layer (S) is a layer produced by electropolymerization and comprises or consists of a polymer that is assembled from a monomeric unit selected from the group consisting of pyrrol, thiophene, aniline, furan, phenol, azulene, carbazole and derivatives thereof, or comprises such unit.

4. Component according to any of the preceding claims,
wherein the layer (S) has an average thickness in the range of from 0.1 to 200 µm.

5. Component according to claim 4,
wherein the layer (S)
- is a layer of dip coat and has an average thickness in the range of from 1 to 200 µm, preferably in the range of from 10 to 60 µm, or
- is a layer produced by electropolymerization and has an average thickness in the range of from 0.1 to 100 µm, preferably in the range of from 1 to 50 µm.

6. Component according to any one of the preceding claims,
wherein the matrix material (M) is selected from the group consisting of thermosetting plastics, particularly epoxides, polyurethanes, polyimides, phenolformaldehyde condensation resins, unsaturated polyesters, vinyl ester resins, and thermoplastics, particularly polyaryl ether ketones, polyaryl ether sulfones, polypropylene, polyamide and polyester.

7. Method for producing a component made of carbon fibre strengthened plastic, comprising the following steps:
(i) providing a component made of carbon fibre strengthened plastic, consisting of or comprising a matrix material (M) and carbon fibres embedded into the matrix material (M), wherein the component has at least one surface section (A) that exhibits one or several exposed areas of the carbon fibres, and
(ii) coating of the exposed areas of the carbon fibres with a layer (S) by means of
(a) electrophoretic dip coating or
(b) potentiostatic, galvanostatic or potentiodynamic electropolymerization,
such that the exposed areas of the carbon fibres of the at least one surface section (A) are coated with a layer (S).

8. Method according to claim 7,
wherein the coating of the exposed areas of the carbon fibres with a layer (S) takes place by means of (a) cataphoretic dip coating.

9. Method according to claim 8,
wherein the coating of the exposed areas of the carbon fibres with a layer (S) takes place by means of (c) potentiostatic electropolymerization using one or several monomers selected from the group consisting of pyrrol, thiophene, aniline, furan, phenol, azulene, carbazole and derivatives thereof,
such that a layer (S) is obtained that comprises a polymer or consists thereof that is assembled from a monomeric unit selected from the group consisting of pyrrol, thiophene, aniline, furan, phenol, azulene, carbazole and derivatives thereof, or comprises such unit.

10. Method according to any one of the claims 7 to 9,
wherein the matrix material (M) is selected from the group consisting of thermosetting plastics, particularly epoxides, polyurethanes, polyimides, phenolformaldehyde condensation resins, unsaturated polyesters, vinyl ester resins, and thermoplastics, particularly polyaryl ether ketones, polyaryl ether sulfones, polypropylene, polyamide and polyester.

11. Assembly consisting of or comprising
(A) a component according to any one of the claims 1 to 6, and
(B) a component comprising or consisting of a material selected from the group consisting of steel, iron, copper, aluminium, magnesium and alloys thereof,
wherein the component according to (A) and the component according to (B) are connected to each other, preferably via one or several contact surfaces.

## Revendications

1. Composant en matière plastique renforcée de fibres de carbone, consistant en ou comprenant un matériau de matrice (M) et des fibres de carbone enrobées dans le matériau de matrice (M), dans lequel le composant possède au moins une portion de surface (A) qui présente une ou plusieurs zones exposées des fibres de carbone, **caractérisé par le fait que** la ou bien les zone(s) exposée(s) des fibres de carbone est ou bien sont revêtue(s) de manière sélective d'une couche (S), dans lequel ladite couche (S) est
- une couche en vernis à immersion appliquée par vernissage électrophorétique à immersion ou
- une couche réalisée par électropolymérisation.

2. Composant selon la revendication 1, dans lequel le revêtement des zones exposées des fibres de carbone d'une couche (S) est réalisé par vernissage électrophorétique à immersion.

3. Composant selon la revendication 1, dans lequel ladite couche (S) est une couche réalisée par électropolymérisation et comprend un polymère ou consiste en celui-ci qui est constitué par ou comprend une unité monomère choisie dans le groupe composé du pyrrole, du thiophène, de l'aniline, du furane, du phénol, de l'azulène, du carbazole et de leurs dérivés.

4. Composant selon l'une quelconque des revendications précédentes, dans lequel ladite couche (S) présente une épaisseur moyenne se situant dans la plage allant de 0,1 à 200 µm.

5. Composant selon la revendication 4, dans lequel ladite couche (S)
- est une couche en vernis à immersion et présente une épaisseur moyenne se situant dans la plage allant de 1 à 200 µm, de préférence dans la plage allant de 10 à 60 µm, ou
- est une couche réalisée par électropolymérisation et présente une épaisseur moyenne se situant dans la plage allant de 0,1 à 100 µm, de préférence dans la plage allant de 1 à 50 µm.

6. Composant selon l'une quelconque des revendications précédentes, dans lequel le matériau de matrice (M) est choisi dans le groupe constitué par les résines thermodurcissables, en particulier les époxydes, les polyuréthanes, les polyimides, les résines de condensation phénol-formaldéhyde, les polyesters insaturés, les résines d'ester de vinyle, et les thermoplastiques, en particulier les polyaryléthercétones, les polyaryléthersulfones, le polypropylène, les polyamides et le polyester.

7. Procédé de fabrication d'un composant en matière plastique renforcée de fibres de carbone, comprenant les étapes consistant à:
(i) fournir un composant en matière plastique renforcée de fibres de carbone, consistant en ou comprenant un matériau de matrice (M) et des fibres de carbone enrobées dans le matériau de matrice (M), dans lequel le composant possède au moins une portion de surface (A) qui présente une ou plusieurs zones exposées des fibres de carbone, et à
(ii) revêtir d'une couche (S) les zones exposées des fibres de carbone par
(a) vernissage électrophorétique à immersion ou
(b) électropolymérisation potentiostatique, galvanostatique ou potentiodynamique,
de sorte que les zones exposées des fibres de carbone de ladite au moins une portion de surface (A) sont revêtues de manière sélective d'une couche (S).

8. Procédé selon la revendication 7, dans lequel le revêtement des zones exposées des fibres de carbone d'une couche (S) est réalisé par vernissage cataphorétique à immersion.

9. Procédé selon la revendication 8, dans lequel le revêtement des zones exposées des fibres de carbone d'une couche (S) est réalisé par (c) électropolymérisation potentiostatique en utilisant un ou plusieurs monomères choisis dans le groupe constitué par le pyrrole, le thiophène, l'aniline, le furane, le phénol, l'azulène, le carbazole et leurs dérivés,
de sorte qu'on obtient une couche (S) qui comprend ou se compose d'un polymère qui est constitué par ou comprend une unité monomère choisie dans le groupe constitué par le pyrrole, le thiophène, l'aniline, le furane, le phénol, l'azulène, le carbazole et leurs dérivés.

10. Procédé selon l'une quelconque des revendications 7 à 9, dans lequel le matériau de matrice (M) est choisi dans le groupe constitué par les résines thermodurcissables, en particulier les époxydes, les polyuréthanes, les polyimides, les résines de condensation phénol-formaldéhyde, les polyesters insaturés, les résines d'ester de vinyle, et les thermoplastiques, en particulier les polyaryléthercétones, les polyaryléthersulfones, le polypropylène, les polyamides et le polyester.

11. Ensemble se composant de ou comprenant
(A) un composant selon l'une quelconque des revendications 1 à 6 et
(B) un composant comprenant ou consistant en un matériau choisi dans le groupe constitué par l'acier, le fer, le cuivre, l'aluminium, le magnésium et les alliages de ceux-ci,
dans lequel le composant selon (A) et le composant selon (B) sont reliés entre eux de préférence par une ou plusieurs surfaces de contact.
